# EUROPÄISCHE PATENTANMELDUNG

(11) **EP 1 772 818 A2**
(43) Veröffentlichungstag der Anmeldung: **11.04.2007**
(21) Anmeldenummer: 05024891.3
(22) Anmeldetag: 15.11.2005
(51) Int. Cl.: G06K 17/00

(54) **Kennung, Überwachungssystem sowie Verfahren zum Verfolgen des Transportweges eines Gepäckstückes**

(30) Priorität: 10.10.2005 DE 202005015972 U
(71) Anmelder: Becker Marine Systems GmbH & Co. KG, 20179 Hamburg (DE)
(72) Erfinder: Lehmann, Dirk, Dipl.-Ing., 21423 Winsen (DE); Schauland, Jörg, 21079 Hamburg (DE)
(74) Vertreter: Richter, Werdermann, Gerbaulet & Hofmann

(57) **Zusammenfassung**

Um den Transportvorgang von mindestens einem Gepäckstück (15, 16, 17) und/oder mindestens einem das Gepäckstück (15, 16, 17) transportierenden Behältnis (40) von einem Ausgangsort (25), insbesondere von einem Check-in-Schalter oder Verladepunkt, zu einem Zielort (37), insbesondere zu einer Kabine eines Passagierschiffs, und/oder umgekehrt so weiterzubilden, dass ein Verladen und Entladen des Gepäckstückes (15, 16, 17) und/oder des das Gepäckstück (15, 16, 17) transportierenden Behältnisses (40) zuverlässig und schnell erfolgen kann, wird vorgeschlagen, dass mindestens eine Kennung (10) zum Verfolgen des Transportweges des Gepäckstückes (15, 16, 17) vom Ausgangsort (25) zum Zielort (37) am Gepäckstück (15, 16, 17) und/oder am das Gepäckstück (15, 16, 17) transportierenden Behältnis (40) anzubringen.

## Beschreibung

### Technisches Gebiet

Die vorliegende Erfindung betrifft den Transportvorgang von mindestens einem Gepäckstück und/oder mindestens einem das Gepäckstück transportierenden Behältnis von einem Ausgangsort, insbesondere von einem Check-In-Schalter oder Verladepunkt, zu einem Zielort, insbesondere zu einer Kabine eines Passagierschiffs, und/oder umgekehrt, insbesondere betrifft die vorliegende Erfindung den Gepäcktransport zu und von einem Schiff.

### Stand der Technik

Passagierschiffe können ohne weiteres 2.500 bis 6.000 und mehr Passagiere aufnehmen, die in Kabinen innerhalb von Decks untergebracht werden. Der Transport von Gepäckstücken zu einem Schiff oder von einem Schiff stellt im Hinblick auf die Größe der vorhandenen und der sich im Bau befindlichen Passagierschiffe ein relativ großes Problem dar.

Das Gepäck muss so schnell wie nur möglich eingeschifft bzw. aus dem Schiff gebracht werden und andererseits muss das Gepäck sicher und ohne vertauscht zu werden vor die richtige Kabine gebracht sowie wieder von der Kabine zum Terminal nach Beendigung der Reise befördert werden, zumal der Passagier in der Regel sein Gepäck im Terminal übernimmt.

### Darstellung der Erfindung: Aufgabe, Lösung, Vorteile

Ausgehend von den vorstehend dargelegten Nachteilen und Unzulänglichkeiten sowie unter Würdigung des umrissenen Standes der Technik liegt der vorliegenden Erfindung die Aufgabe zugrunde, den eingangs genannten Transportvorgang des Gepäckstückes und/oder des das Gepäckstück transportierenden Behältnisses so weiterzubilden, dass ein Verladen und Entladen des Gepäckstückes und/oder des Behältnisses zuverlässig und schnell erfolgen kann.

Diese Aufgabe wird durch eine Kennung mit den im Anspruch 1 angegebenen Merkmalen, durch ein Überwachungssystem mit den im Anspruch 6 angegebenen Merkmalen sowie durch ein Verfahren mit den im Anspruch 9 angegebenen Merkmalen gelöst. Vorteilhafte Ausgestaltungen und zweckmäßige Weiterbildungen der vorliegenden Erfindung sind in den jeweiligen Unteransprüchen gekennzeichnet.

Erfindungsgemäß erfolgt das Verfolgen des Transportweges des Gepäckstückes vom Ausgangsort zum Zielort mittels mindestens einer Kennung, wobei die Kennung am Gepäckstück und/oder an mindestens einem das Gepäckstück transportierenden Behältnis anbringbar ist.

Um den Transportweg des Gepäckstückes verfolgen zu können, ist gemäß einer vorteilhaften Ausführungsform der vorliegenden Erfindung die Kennung am Ausgangsort und/oder am Zielort computermäßig erfassbar.

Unabhängig hiervon oder in Ergänzung hierzu ist vorteilhafterweise die Kennung an mindestens einer, vorzugsweise an jeder, zwischen dem Ausgangsort und dem Zielort gelegenen Station, z. B. an mindestens einer Zwischenstation, etwa an mindestens einer Zollstation mit Sicherheitsüberprüfung und/oder an mindestens einer Lagerhalle und/oder an mindestens einem Lift und/oder an mindestens einem Zwischendeck, computermäßig erfassbar.

Die Kennung kann als mindestens eine maschinenlesbare Einrichtung und/oder als mindestens eine Transpondereinheit ausgebildet sein.

Eine Kennung aus Kunststoff hat den Vorteil einer langen Lebensdauer bei relativ leichtem Gewicht.

Ferner ist die Kennung vorteilhafterweise zur Aufnahme von Daten und/oder Informationen, wie z. B. Gewicht und/oder Kabinennummer und/oder Passagiername, ausgebildet. Die Möglichkeit der Speicherung von Daten und/oder Informationen durch die Kennung ist insbesondere beim Transport des Gepäckstückes bzw. des das Gepäckstück transportierenden Behältnisses mittels einer Gepäckautomation vorteilhaft.

Zweckmäßigerweise können die mittels der Kennung gespeicherten Daten und/oder Informationen zumindest teilweise mittels mindestens einer Leseeinheit, insbesondere mittels mindestens einem Transponder-Lesegerät, ausgelesen werden.

Optionalerweise können die Daten und/oder Informationen zumindest teilweise mittels einer Auswerteeinheit, insbesondere mittels einer Prozessoreinheit, ausgewertet werden.

Ferner können vorteilhafterweise die mittels der Kennung gespeicherten Daten und/oder Informationen und/oder die mittels der Leseeinheit ausgelesenen und/oder mittels der Auswerteeinheit ausgewerteten Daten und/oder Informationen zumindest teilweise mittels mindestens einer Anzeigeeinheit, insbesondere mittels mindestens einem Monitor, dargestellt werden.

Die Anzeigeeinheit kann beispielsweise ein Flachbildschirm sein, der vorteilhafterweise in der Nähe des Ausgangsorts und/oder des Zielorts und/oder der zwischen dem Ausgangsort und dem Zielort gelegenen Station, an welcher die Kennung computermäßig erfasst wird, angeordnet ist.

Das das Gepäckstück transportierende Behältnis kann als mindestens eine Einrichtung, insbesondere als Transportkiste oder wannenförmiger Behälter oder Kleincontainer, zur Verladung und Entladung des Gepäckstückes bei einem Passagierschiff, insbesondere einem Kreuzfahrtschiff mit Schiffskabinen in Schiffsdecks, ausgebildet sein.

Dabei ist das Behältnis dazu ausgelegt, das jeweilige Gepäckstück der einzelnen Schiffskabinen vom Ausgangsort außerhalb des Schiffes bis hin zur mindestens einen zwischen dem Ausgangsort und dem Zielort gelegenen Station bzw. zum Zielort und/oder in umgekehrter Richtung zu transportieren.

Durch die erfindungsgemäße Lösung wird die Gepäckorganisation erheblich erleichtert sowie beschleunigt. Ein Verladen und Entladen kann sogar just-in-time erfolgen.

So muss beispielsweise ein Passagier einer Schiffsreise nicht lange auf sein Gepäck warten, wenn für den Transport der Gepäckstücke zum Schiff bis in die vom Passagier gebuchte Kabine die Gepäckstücke und/oder das die Gepäckstücke transportierende Behältnis mittels der erfindungsgemäßen Kennung markiert werden.

Ferner ermöglicht die vorliegende Erfindung das Verfolgen des mit der jeweiligen Kennung markierten Gepäckstückes und/oder Behältnisses für die Dauer der gesamten Reise. Dies ist insbesondere bei Schiffsreisen hilfreich, bei denen das Gepäckstück und/oder das Behältnis, nachdem das Gepäckstück vom Passagier in der Kabine ausgepackt wurde, in einem Gepäcklagerraum aufbewahrt wird und somit nur während des Packens und Entpackens in der Kabine des Passagiers ist.

Des Weiteren wird vermieden, dass am Tag vor dem Tag des Auscheckens der Passagier schon sein Gepäck vor die Kabinentür stellen muss und somit keine Gelegenheit mehr hat, evtl. angelegte festliche Kleidung im Koffer zu verstauen.

Vorteilhafterweise ist die Kennung gut sichtbar und weist insbesondere mindestens eine markante Form- und/oder Farbgebung auf. Dies bietet den Vorteil, dass der Passagier sein Gepäck beispielsweise an einem Gepäckausgabepunkt nicht lange suchen muss. Durch die gut sichtbare Kennung am Behältnis und/oder am Gepäckstück kann auch sicher vermieden werden, dass bei ähnlichen oder sogar gleich aussehenden Gepäckstücken der Passagier ein falsches Gepäckstück entnimmt.

Die Kennzeichnung der Gepäckstücke mittels der Kennung erleichtert auch die Zuordnung der Gepäckstücke zum Zielort, beispielsweise zur jeweiligen Kabine oder zum jeweiligen Schiffsdeck. Vorteilhafterweise ist die Kennung derart gestaltet, dass sie durch ihre Form und/oder Farbgebung und/oder durch die von ihr gespeicherten Daten eindeutig dem Zielort des ihr zugeordneten Gepäckstückes bzw. des ihr zugeordneten Behältnisses zuordbar ist.

Die vorliegende Erfindung betrifft schließlich die Verwendung mindestens einer Kennung gemäß der vorstehend dargelegten Art und/oder mindestens eines Überwachungssystems gemäß der vorstehend dargelegten Art und/oder eines Verfahrens gemäß der vorstehend dargelegten Art zum Erfassen der jeweiligen Position, insbesondere des jeweiligen Aufbewahrungsorts oder des jeweiligen Standorts, des Gepäckstückes und/oder des das Gepäckstück transportierenden Behältnisses, insbesondere beim Transport des Gepäckstückes und/oder des Behältnisses mittels mindestens einem automatischen Transportsystem, beispielsweise mittels mindestens einer Gepäckautomation.

### Kurze Beschreibung der Zeichnungen

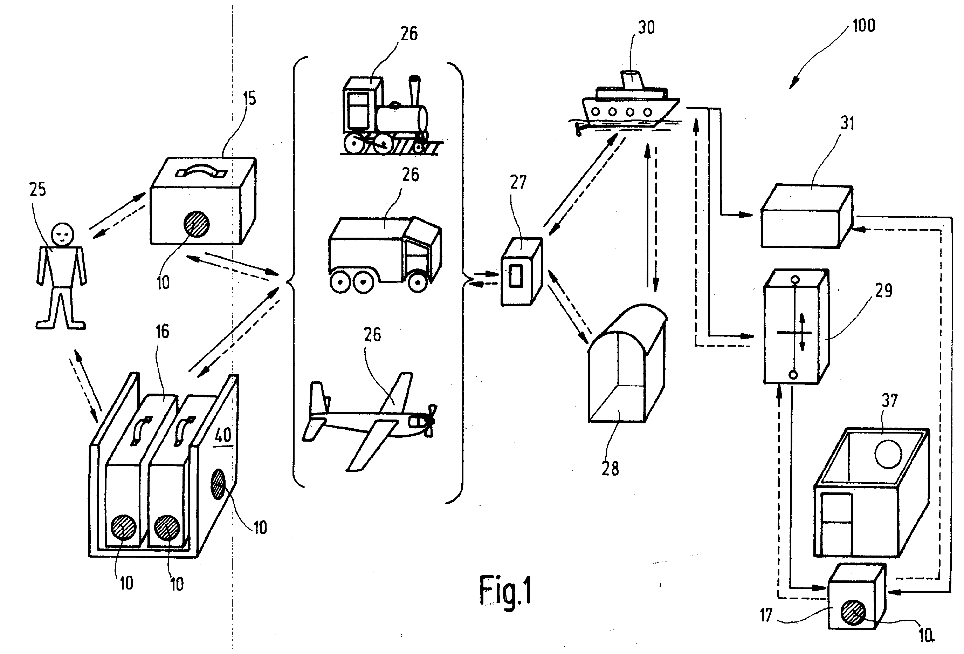

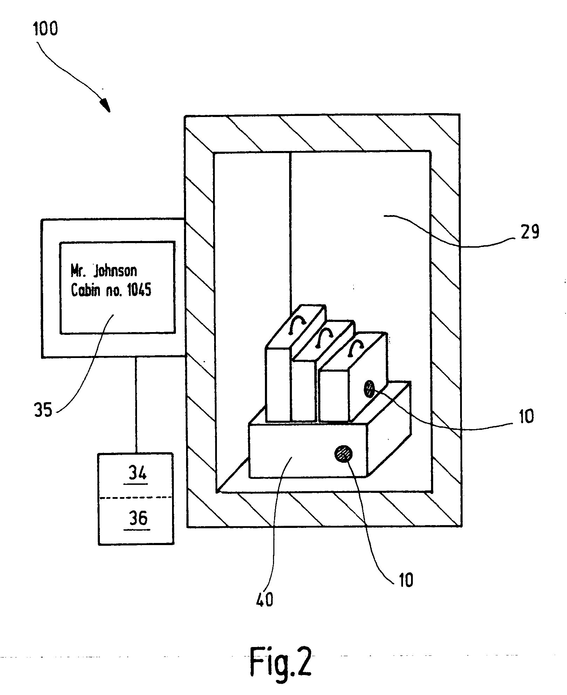

Wie bereits vorstehend erörtert, gibt es verschiedene Möglichkeiten, die Lehre der vorliegenden Erfindung in vorteilhafter Weise auszugestalten und weiterzubilden. Hierzu wird einerseits auf die dem Anspruch 1, sowie dem Anspruch 6 nachgeordneten Ansprüche verwiesen, andererseits werden weitere Ausgestaltungen, Merkmale und Vorteile der vorliegenden Erfindung nachstehend anhand des durch die Figuren 1 und 2 veranschaulichten Ausführungsbeispiels näher erläutert.

Es zeigt:
- Fig. 1: in schematischer Darstellung ein Ausführungsbeispiel für ein Überwachungssystem gemäß der vorliegenden Erfindung, das nach dem Verfahren gemäß der vorliegenden Erfindung arbeitet und
- Fig. 2: in schematischer Darstellung das Überwachungssystem aus Fig. 1 an einer zwischen dem Ausgangsort und dem Zielort gelegenen Station.

Gleiche oder ähnliche Ausgestaltungen, Elemente oder Merkmale sind in den Fig. 1 und 2 mit identischen Bezugszeichen versehen.

### Bester Weg zur Ausführung der Erfindung

Fig. 1 zeigt eine bevorzugte Ausführungsform der vorliegenden Erfindung, insbesondere die Verfolgung von Gepäckstücken 15, 16, 17 von einem Ausgangsort 25, nämlich einem Verladepunkt, zu einem Zielort 37, nämlich zu einer Kabine 37 eines Passagierschiffs 30.

Wie Fig. 1 entnehmbar, werden Einzelgepäckstücke 15, 16 und ein Gepäckstücke 16 transportierendes Behältnis 40 zunächst vom Verladepunkt 25 beispielsweise mittels eines mindestens eines Transportmittels 26, beispielsweise mittels eines Förderbandes oder per Bahn, Lastkraftwagen oder Flugzeug, zu einer ersten zwischen dem Ausgangsort 25 und dem Zielort 37 gelegen Zwischenstation 27, nämlich einer Zollstation mit Sicherheitsüberprüfung transportiert.

Nach der Zollabfertigung werden das Gepäck 15, 16 und das Behältnis 40 evtl. in einer zweiten zwischen dem Ausgangsort 25 und dem Zielort 37 gelegen Zwischenstation 28, nämlich einer Lagerhalle zwischengelagert und anschließend zum Passagierschiff 30 transportiert.

Auf dem Passagierschiff 30 werden das Gepäck 15, 16 und das Behältnis 40 eventuell mittels eines Gepäcklifts 29 zum gewünschten Deck 31 des Passagierschiffs 30, z. B. zum Zwischendeck, und von dort zum Zielort, nämlich zur gewünschten Kabine 37 transportiert.

Um den Transportweg des Gepäcks 15, 16, 17 verfolgen zu können, ist es wesentlich, dass die jeweiligen Einzelgepäckstücke 15, 16, 17 und/oder das Behältnis 40 von Anfang an mit Kennungen 10 versehen werden.

Diese Kennungen 10 können an jeder zwischen dem Ausgangsort 25 und dem Zielort 37 gelegen Zwischenstation 27, 28, 29, 31 computermäßig erfasst werden, was in der Detailansicht der Fig. 2 am Beispiel der Zwischenstation des Gepäckaufzugs 29 dargestellt ist.

Die Kennungen 10 können maschinenlesbare Einrichtungen oder Transponder oder dergleichen sein, die zum Speichern von Daten und/oder Informationen, wie z. B. Gewicht und/oder Kabinennummer und/oder Passagiername, ausgebildet sind.

Zum Auslesen der mittels der Kennung 10 gespeicherten Daten und/oder Informationen weist das in Fig. 2 dargestellte Überwachungssystem 100 vorzugsweise an jeder Station, an der die Kennung 10 computermäßig erfasst wird, also beispielsweise am Ausgangsort 25, an den Zwischenstationen 27, 28, 29, 31 und am Zielort 37, jeweils mindestens eine Leseeinheit 36, beispielsweise ein Transponder-Lesegerät, auf.

Des Weiteren weist das Überwachungssystem 100 zur computermäßigen Erfassung der Kennungen 10 vorzugsweise an jeder Station 25, 27, 28, 29, 31, 37 mindestens eine Auswerteeinheit 34, insbesondere mindestens einen Prozessor, zum Auswerten der mittels der Leseeinheit 36 ausgelesenen Daten und/oder Informationen auf.

Ferner weist das Überwachungssystem 100 vorzugsweise an jeder Station 25, 27, 28, 29, 31, 37 an der die Kennung 10 computermäßig erfasst wird eine Anzeigeeinheit 35, insbesondere einen Flachbildschirmmonitor, zur Darstellung der der mittels der Leseeinheit 36 ausgelesenen und/oder mittels der Auswerteeinheit 34 ausgewerteten Daten und/oder Informationen auf.

Mittels des Überwachungssystems 100 kann somit jeder Standort der jeweiligen Gepäckstücke 15, 16, 17 sowie des Behältnisses 40 erfasst werden.

Die in der Detailansicht der Fig. 2 dargestellte Leseeinheit 36, Auswerteeinheit 34 und Anzeigeeinheit 35 sind aus Gründen der Übersichtlichkeit in Fig. 1 nicht dargestellt.

Kurz gesagt schlägt die vorliegende Erfindung vor, mindestens eine Kennung 10 zum Verfolgen des Transportweges des Gepäckstückes 15, 16, 17 vom Ausgangsort 25 zum Zielort 37 am Gepäckstück 15, 16, 17 und/oder am das Gepäckstück 15, 16, 17 transportierenden Behältnis 40 anzubringen, um den Transportvorgang des Gepäckstückes 15, 16, 17 und/oder des das Gepäckstück 15, 16, 17 transportierenden Behältnisses 40 vom Ausgangsort 25 zum Zielort 37 und/oder umgekehrt so weiterzubilden, dass ein Verladen und Entladen des Gepäckstückes 15, 16, 17 und/oder des das Gepäckstück 15, 16, 17 transportierenden Behältnisses 40 zuverlässig und schnell erfolgen kann.

Die Erfindung ist nicht nur auf die dargestellten und beschriebenen Ausführungsformen beschränkt, sondern kann andere Kennungen oder Überwachungssysteme umfassen, die den selben Zweck erfüllen.

### Bezugszeichenliste

- 10: Kennung, insbesondere maschinenlesbare Einrichtung und/oder Transpondereinheit
- 15, 16, 17: Gepäckstücke
- 25: Ausgangsort, insbesondere Check-In-Schalter oder Verladeort
- 26: Transportmittel, insbesondere Bahn, Kraftfahrzeug oder Flugzeug, zum Transportieren der Gepäckstücke 15, 16, 17 vom Ausgangsort 25 zu mindestens einer Station 27, 28, 29, 31
- 27: Station (erste) zwischen Ausgangsort 25 und Zielort 37, insbesondere Zollstation mit Sicherheitsüberprüfung
- 28: weitere Station (zweite) zwischen Ausgangsort 25 und Zielort 37, insbesondere Lagerhalle
- 29: weitere Station (dritte) zwischen Ausgangsort 25 und Zielort 37, insbesondere Gepäckaufzug, beispielsweise Lift eines Schiffs
- 30: Schiff, insbesondere Passagierschiff
- 31: weitere Station (vierte) zwischen Ausgangsort 25 und Zielort 37, insbesondere Zwischendeck eines Schiffs
- 34: Auswerteeinheit, insbesondere Prozessor
- 35: Monitor Anzeigemonitor
- 36: Leseeinheit, insbesondere Transponder-Lesegerät
- 37: Zielort, insbesondere Kabine eines Passagierschiffs
- 40: Behältnis, insbesondere Transportkiste oder wannenförmiger Behälter oder Kleincontainer
- 100: Überwachungssystem

## Patentansprüche

1. Kennung (10) zum Verfolgen des Transportweges mindestens eines Gepäckstückes (15, 16, 17) von einem Ausgangsort (25), insbesondere von einem Check-In-Schalter oder Verladepunkt, zu einem Zielort (37), insbesondere zu einer Kabine eines Passagierschiffs, wobei die Kennung (10) am Gepäckstück (15, 16, 17) und/oder an mindestens einem das Gepäckstück (15, 16, 17) transportierenden Behältnis (40) anbringbar ist.

2. Kennung gemäß Anspruch 1,
**dadurch gekennzeichnet,**
**dass** die Kennung (10), insbesondere
- am Ausgangsort (25) und/oder
- an mindestens einer zwischen dem Ausgangsort (25) und dem Zielort (37) gelegenen Station (27, 28, 29, 31), zum Beispiel an mindestens einer Zwischenstation, etwa an mindestens einer Zollstation mit Sicherheitsüberprüfung und/oder an mindestens einer Lagerhalle und/oder an mindestens einem Lift und/oder an mindestens einem Zwischendeck, und/oder
- am Zielort (37)
computermäßig erfassbar ist.

3. Kennung gemäß Anspruch 1 oder 2,
**dadurch gekennzeichnet,**
**dass** die Kennung (10) als mindestens eine maschinenlesbare Einrichtung und/oder als mindestens eine Transpondereinheit ausgebildet ist.

4. Kennung gemäß mindestens einem der Ansprüche 1 bis 3,
**dadurch gekennzeichnet,**
**dass** die Kennung (10) zur Aufnahme von Daten und/oder Informationen, wie z. B. Gewicht und/oder Kabinennummer und/oder Passagiername, ausgebildet ist und/oder gut sichtbar ist, insbesondere mindestens eine markante Form- und/oder Farbgebung aufweist.

5. Kennung gemäß mindestens einem der Ansprüche 1 bis 4,
**dadurch gekennzeichnet,**
**dass** das Behältnis (40)
- als mindestens eine Einrichtung, insbesondere als Transportkiste oder wannenförmiger Behälter oder Kleincontainer, zur Verladung und Entladung des Gepäckstückes (15, 16, 17) bei einem Passagierschiff, insbesondere einem Kreuzfahrtschiff mit Schiffskabinen in Schiffsdecks, ausgebildet ist und
- dazu ausgelegt ist, das jeweilige Gepäckstück (15, 16, 17) der einzelnen Schiffskabinen vom Ausgangsort (25) außerhalb des Schiffes bis hin
- zur mindestens einen zwischen dem Ausgangsort (25) und dem Zielort (37) gelegenen Station (27, 28, 29 31), zum Beispiel zur mindestens einen Zwischenstation, etwa zu mindestens einer Zollstation mit Sicherheitsüberprüfung und/oder zu mindestens einem Lagerhalle und/oder zu mindestens einem Lift und/oder zu mindestens einem Zwischendeck, bzw.
- zum Zielort (37)
und/oder in umgekehrter Richtung zu transportieren.

6. Überwachungssystem (100) zum Verfolgen des Transportweges mindestens eines Gepäckstückes (15, 16, 17) von einem Ausgangsort (25), insbesondere von einem Check-In-Schalter oder Verladepunkt, zu einem Zielort (37), insbesondere zu einer Kabine eines Passagierschiffs, aufweisend
- mindestens eine Kennung (10) gemäß mindestens einem der Ansprüche 1 bis 5 und
- mindestens eine Leseeinheit (36), insbesondere mindestens ein Transponder-Lesegerät, zum Auslesen von zumindest einem Teil der mittels der Kennung (10) gespeicherten Daten und/oder Informationen.

7. Überwachungssystem gemäß Anspruch 6,
**gekennzeichnet durch**
mindestens eine Auswerteeinheit (34), insbesondere mindestens ein Prozessor, zum Auswerten von zumindest einem Teil der mittels der Leseeinheit (36) ausgelesenen Daten und/oder Informationen.

8. Überwachungssystem gemäß Anspruch 6 oder 7,
**gekennzeichnet durch**
mindestens eine Anzeigeeinheit (35), insbesondere mindestens einen Monitor, zum Anzeigen von zumindest einem Teil der mittels der Leseeinheit (36) ausgelesenen und/oder mittels der Auswerteeinheit (34) ausgewerteten Daten und/oder Informationen.

9. Verfahren zum Verfolgen des Transportweges mindestens eines Gepäckstückes (15, 16, 17) von einem Ausgangsort (25), insbesondere von einem Check-In-Schalter oder Verladepunkt, zu einem Zielort (37), insbesondere zu einer Kabine eines Passagierschiffs, wobei das Gepäckstück (15, 16, 17) und/oder mindestens ein das Gepäckstück transportierendes Behältnis (40) am Ausgangsort (25) mit mindestens einer Kennung (10), insbesondere gemäß mindestens einem der Ansprüche 1 bis 5, versehen wird.

10. Verwendung mindestens einer Kennung (10) gemäß mindestens einem der Ansprüche 1 bis 5 und/oder mindestens eines Überwachungssystems (100) gemäß mindestens einem der Ansprüche 6 bis 8 und/oder des Verfahrens gemäß Anspruch 9 zum Erfassen der jeweiligen Position, insbesondere des jeweiligen Aufbewahrungsorts oder des jeweiligen Standorts, des Gepäckstückes (15, 16, 17) und/oder des das Gepäckstück (15, 16, 17) transportierenden Behältnisses (40), insbesondere beim Transport des Gepäckstückes (15, 16, 17) und/oder des Behältnisses (40) mittels mindestens einem automatischen Transportsystem.
